# EUROPÄISCHE PATENTSCHRIFT

(11) **EP 2 799 283 B1**
(45) Veröffentlichungstag und Bekanntmachung des Hinweises auf die Patenterteilung: **10.04.2019**
(21) Anmeldenummer: 14165629.8
(22) Anmeldetag: 23.04.2014
(51) Int. Cl.: B60P 1/64, B60P 1/16, F15B 15/14

(54) **Lastentransportfahrzeug mit einem Wechselbehälter und einem Hubgerät für den Wechselbehälter**
Load transport vehicle with an interchangeable container and a lifting device for the interchangeable container
Véhicule de transport de charge doté d'un conteneur interchangeable et d'un appareil de levage pour un conteneur interchangeable

(30) Priorität: 03.05.2013 DE 102013208124
(43) Veröffentlichungstag der Anmeldung: 05.11.2014
(73) Patentinhaber: Franz Xaver Meiller Fahrzeug- und Maschinenfabrik-GmbH & Co KG, 80997 München (DE)
(72) Erfinder: Märkl, Günther, 85229 Niederroth (DE)
(74) Vertreter: Weickmann & Weickmann PartmbB

(56) Entgegenhaltungen:
- EP-A2- 1 702 792
- FR-A1- 2 526 882
- JP-A- S52 114 862
- US-A- 2 148 616

## Beschreibung

Die Erfindung betrifft ein Hubgerät für Wechselbehälter für ein Lastentransportfahrzeug, insbesondere auf einem Abrollkipperfahrzeug oder einem Absetzkipperfahrzeug, umfassend wenigstens einen Schwenkarm zum Abladen eines Wechselbehälters von dem Lastentransportfahrzeug bzw. zum Aufladen eines Wechselbehälters auf das Lastentransportfahrzeug und eine hydraulische Schwenkantriebszylinderanordnung als Schwenkantriebsmittel für den Schwenkarm.

Hydraulisch angetriebene Lastenbewegungsgeräte in Form von Schwenkarmen findet man beispielsweise bei sogenannten Abrollkipperfahrzeugen (vgl. z.B. DE 33 32 275 A1, DE 29 03 462 C2 und DE 196 37 891 A1). Solche Abrollkipperfahrzeuge üblicher Bauart weisen einen in Fahrzeuglängsmitte vorgesehenen schwenkbaren Lasthebearm auf, der um eine horizontale und quer zur Fahrzeuglängsrichtung verlaufende Schwenkachse zwischen einer ersten Schwenkstellung und einer zweiten Schwenkstellung schwenkbar ist und an seinem von der Schwenkachse entfernten Ende einen Hakenarm mit einem daran vorgesehenen Haken aufweist, der mit einer komplementären Öse eines Wechselbehälters in Eingriff zu bringen ist. In einer normalen Fahrtstellung stützt sich der Wechselbehälter auf dem Fahrzeugaufbau bzw. einem Basisrahmen ab, wobei der im Folgenden auch als Schwenkarm bezeichnete Lasthebearm im Wesentlichen horizontal liegt und sich der Hakenarm vom Lasthebearm vertikal nach oben zur Öse des Wechselbehälters erstreckt. Soll nun ein solcher Wechselbehälter vom Fahrzeug abgeladen werden, so ist dies dadurch zu erreichen, dass der Lasthebearm aus seiner ersten Schwenkstellung um seine Schwenkachse herum und über eine näherungsweise aufrechte Totpunktlage hinweg in eine zweite Schwenkstellung verschwenkt wird. Bei einem solchen Schwenkvorgang kann der Wechselbehälter an Rollen, die sich am Fahrzeugheck befinden, abrollen und sich dabei nach und nach weiter vom Fahrzeugaufbau entfernen, bis der Wechselbehälter vollständig auf dem Boden hinter dem Fahrzeugheck abgesetzt worden ist. Als Schwenkantriebsmittel für den Schwenkarm sind bei Abrollkipperfahrzeugen normalerweise zwei doppeltwirkende hydraulische Zylinder vorgesehen. Die hydraulischen Zylinder sind mit ihren entgegengesetzten Enden einerseits an einem rahmenfesten Aufbau des Fahrzeugs- und andererseits am Schwenkarm angelenkt, wobei sie im Wesentlichen parallel zueinander angeordnet und mechanisch zum Gleichlauf gekoppelt sind. Das Verschwenken des Schwenkarmes erfolgt durch Ausfahren bzw. Einziehen der Kolbenstangen der hydraulischen Zylinder, wobei hierzu die doppeltwirkenden Zylinder mit Hydraulikfluid von einer Hydraulikpumpe beaufschlagt werden. Die hydraulische Pumpe ist über ein hydraulisches Leitungssystem mit daran befindlichen Lasthalteventilen usw. mit den Zylindern verbunden. Rücklaufleitungen mit darin befindlichen Halteventilen dienen dazu, aus den Zylindern verdrängtes Hydraulikfluid in einen Tank zurückzuführen.

Aus der DE 100 63 610 A1 ist es bekannt, dass schwenkbare Lasthebearme (Schwenkarme) bei Absetzkipperfahrzeugen und bei Abrollkipperfahrzeugen in einer Eilgang-Betriebsart betrieben werden können. In der üblicherweise nur über einen begrenzten Schwenkwinkelbereich zu wählenden Eilgang-Betriebsart kann die Lasthebearmanordnung mit größerer Geschwindigkeit verschwenkt werden, als dies in einer Normalbetriebsart der Fall ist.

Bei Abrollkipperfahrzeugen sind die hydraulischen Zylinder mit eingezogenen Kolbenstangen normalerweise nahezu horizontal ausgerichtet, wenn sich der Schwenkarm in seiner normalen Fahrtstellung- und somit ebenfalls in einer nahezu horizontalen Ausrichtung auf dem Fahrzeugaufbau befindet. Werden die hydraulischen Zylinder ausgehend von ihrer Stellung eingezogener Kolbenstangen nun durch Beaufschlagung mit Druckfluid aktiviert, um die Kolbenstangen auszufahren und somit den Schwenkarm zu verschwenken, so ist der orthogonal zur Kraftwirkungslinie der jeweiligen Kolbenstange und orthogonal zu der Schwenkachse des Schwenkarmes zu messende Abstand zwischen Kolbenstangen und Schwenkachse und somit der Hebelarm zum Verschwenken des Schwenkarmes zunächst sehr klein. Mit anderen Worten heißt dies, dass zu Beginn der Schwenkbewegung die Hebelverhältnisse zwischen den hydraulischen Zylindern und dem Schwenkarm sehr ungünstig sind und die hydraulischen Zylinder daher eine zunächst große Kraft aufzubringen haben, um den Schwenkarm aus seiner im Wesentlichen horizontalen Fahrtstellung heraus zu verschwenken. Nach dem anfänglichen Herausbewegen des Schwenkarmes aus seiner normalen Fahrtstellung werden die Hebelverhältnisse zwischen den hydraulischen Zylindern und dem Schwenkarm günstiger, d.h. der Hebelarm wird zunächst größer, so dass bei gleichem Drehmoment die von den hydraulischen Zylindern aufzubringenden Kräfte geringer werden können. Nach Überschreiten einer bestimmten Schwenkstellung, z.B. der Totpunktstellung des Schwenkarms, können die Hebelverhältnisse wieder ungünstiger werden. Üblicherweise ist jedoch der wirksame Hebelarm in allen weiteren Schwenkstellungen des Schwenkarmes größer als in der horizontalen Ausgangsstellung mit eingezogenen Kolbenstangen. Die hydraulischen Zylinder sind daher so zu dimensionieren, dass sie die großen Kräfte zu Beginn der Schwenkbewegung des Schwenkarmes aus der normalen Fahrtstellung bei spezifizierter Maximallast auf dem Schwenkarm aufbringen können.

Auch bei den üblichen Absetzkipperfahrzeugen ändern sich die Hebelverhältnisse beim Verschwenken der für die Handhabung von Wechselbehältern vorgesehenen Schwenkarme des betreffenden Hubgerätes aufgrund des sich ändernden Winkels zwischen der Kraftwirkungslinie des betreffenden hydraulischen Zylinders und des davon zur Schwenkbewegung angetriebenen Schwenkarmes beim Ausfahren der Kolbenstange. Auch bei solchen Absetzkipperfahrzeugen ist die von den hydraulischen Antriebszylindern der Schwenkarme aufzubringende Kraft normalerweise am größten zu Beginn der Schwenkbewegung aus der normalen Fahrtstellung der Schwenkarme heraus. Auch die für den Schwenkbetrieb von Absetzkippern verwendeten hydraulischen Zylinder sind daher so dimensioniert, dass sie die geforderten Kräfte bei den ungünstigen Hebelverhältnissen zu Beginn der Schwenkbewegung der Schwenkarme aus der Normalstellung heraus aufbringen können.

Sowohl bei Absetzkipperfahrzeugen als auch bei Abrollkipperfahrzeugen sind üblicherweise zwei mechanisch oder hydraulisch zum Gleichlauf gekoppelte hydraulische Zylinder vorgesehen, welche einerseits an dem Schwenkarm und andererseits am Fahrzeugrahmen angelenkt sind.

Der Aufbau eines konventionellen Teleskopzylinders, wie er als Kipperpresse, z.B. bei Großmuldenkipperfahrzeugen Verwendung findet, ist z.B. in der US 5 694 827 erläutert.

Die EP 1 702 792 A2 offenbart ein Hubgerät für Wechselbehälter auf einem Lastentransportfahrzeug mit einem Teleskopzylinder, der als Schwenkantriebsmittel für eine Schwenkmechanik zum Auf- und Abladen eines Wechselbehälers dient. Der Teleskopzylinder weist zwei Stufen auf, mit denen jeweils verschieden große Kräfte und Wege realisiert werden können. Um ungünstige Hebelverhältnisse zu Beginn des Abladens eines Wechselbehälters zu kompensieren, wird zunächst eine Teleskopzylinderstufe mit großer Kraft und kurzem Hubweg aktiviert, bis bessere Hebelverhältnisse und geringere Lasten an dem Teleskopzylinder erreicht sind. Dann tritt die zweite Teleskopzylinderstufe in Kraft, die mit geringeren Kräften einen längeren Hubweg realisiert. Nachteilig an diesem Teleskopzylinder ist, dass er ein relativ aufwendiges Spezialteil ist, das nur in kleineren Stückzahlen hergestellt wird. Dementsprechend ist der Teleskopzylinder relativ teuer. Weiter ist nachteilig, dass die wirksamen Zylinderdurchmesser der beiden Stufen konstruktiv miteinander gekoppelt sind. Zudem ist im Allgemeinen nur der Ersatz des gesamten Teleskopzylinders möglich.

Aus der GB 2 148 616 A ist ein Kipperfahrzeug mit einer um eine heckseitige Kippachse schwenkbaren Kippbrücke bekannt. Als Schwenkantrieb der Kippbrücke dient ein hydraulischer Zylinder, welcher in seinem Zylindergehäuse zwei koaxiale Zylinderbohrungen mit unterschiedlichen Durchmessern aufweist. In der Zylinderbohrung mit dem kleineren Durchmesser ist ein Kolben beweglich geführt, an welchem eine abgedichtet nach außen geführte Kolbenstange befestigt ist. In der Zylinderbohrung mit dem größeren Durchmesser ist ein Plungerkolben bewegbar geführt, welcher einen Stößel aufweist, der koaxial zu den Zylinderbohrungen in die Zylinderbohrung mit dem kleineren Durchmesser hineinreicht. In diesem Zustand eingezogener Kolbenstange stehen der in der Zylinderbohrung mit kleinerem Durchmesser bewegbare Kolben und der Stößel miteinander in Verbindung.

Bei Aktivierung des Zylinders gerät zunächst der Plungerkolben unter Druck und bewegt sich in seiner Bohrung mit dem größeren Durchmesser vor, wobei er mit seinem Stößel den Kolben in der kleineren Zylinderbohrung vor sich herschiebt. Der Kolben gerät dabei in eine Anschlagstellung und gibt in der Anschlagstellung eine Bypassleitung von der größeren zur kleineren Zylinderbohrung frei, so dass nun das Druckfluid unmittelbar auf den Kolben in der kleineren Zylinderbohrung wirkt und diesen vorschiebt, so dass die Kolbenstange ausfährt. Der Hubweg des größeren Plungerkolbens ist erheblich kürzer als der Hubweg des die Kolbenstange aufweisenden kleineren Kolbens. Damit wird erreicht, dass zunächst durch Wirkung des größeren Kolbens eine größere Kraft zu Beginn des Kippvorgangs beim Kippen der Kippbrücke aus ihrer normalen Grundstellung heraus aufgebracht wird, also in einer Situation, in der ungünstige Hebelverhältnisse herrschen. Danach kommt dann der kleinere Kolben zum Einsatz, welcher mit geringerer Kraft, dafür aber ggf. schneller bewegt werden kann, um den Kippvorgang fortzusetzen.

In der FR 2 526 882 A1 ist eine Zylinderanordnung dargestellt, gemäß welcher in einem gemeinsamen Zylindergehäuse mit entsprechenden seitlichen Unterteilungen Zylinderräume vorgesehen sind, in welchen Kolben längs parallel zueinander verlaufenden, jedoch seitlich voneinander beabstandeten Achsen bewegbar geführt sind. Die Kolben weisen zu entgegengesetzten Seiten des Zylindergehäuses abstehende Kolbenstangen auf.

Der Erfindung liegt die Aufgabe zugrunde, bei einem Lastentransportfahrzeug der eingangs genannten Art ein alternatives Schwenkantriebsmittel für das Hubgerät vorzusehen, das dazu ausgelegt ist, den Schwenkarm entsprechend den sich beim dessen Schwenkvorgang ändernden Hebelverhältnissen in einer günstigen Weise zum Schwenken anzutreiben und eine einfache, flexible und kostengünstige Konstruktion des Schwenkantriebsmittels ermöglicht.

Zur Lösung dieser Aufgabe wird erfindungsgemäß vorgeschlagen, dass bei einem Hubgerät der eingangs genannten Art die Schwenkantriebszylinderanordnung wenigstens einen Doppelzylinder umfasst, der zwei in Reihe miteinander gekoppelte doppeltwirkende Einzelzylinder aufweist, die jeweils eine Zylinderkammer und einen darin verschiebbaren eigenen Kolben mit aus der jeweiligen Zylinderkammer ausfahrbarer Kolbenstange aufweisen, wobei einer der Einzelzylinder einen kleineren wirksamen Kolbendurchmesser als der andere Einzelzylinder aufweist und das Verhältnis des wirksamen Kolbendurchmessers des einen Einzelzylinders zu dem wirksamen Kolbendurchmesser des anderen Einzelzylinders zwischen 1:1,1 und 1:1,5, insbesondere etwa 1:1,25 beträgt, wobei ferner eine Kolbenlängsachse von einem der Einzelzylinder mit einer Kolbenlängsachse von dem anderen Einzelzylinder fluchtet und die Einzelzylinder so miteinander in Reihe gekoppelt sind, dass die Kolbenstangen in entgegengesetzten Richtungen aus der jeweiligen Zylinderkammer ausfahrbar sind.

Mit einer Kopplung der Einzelzylinder in Reihe ist gemeint, dass sich der Ausfahrweg von deren Kolbenstangen aus den jeweiligen Zylinderkammern zu einem Gesamtausfahrweg des Doppelzylinders addiert. Der Gesamtausfahrweg korrespondiert insbesondere mit dem Abstand von zwei Befestigungsaugen des Doppelzylinders an dessen entgegengesetzten Enden. Mit einem Doppelzylinder ist hier kein Teleskopzylinder, sondern es sind zwei miteinander verbundene einzelne doppeltwirkende Hydraulikzylinder gemeint. Dies bringt verschiedene Vorteile mit sich. Insbesondere sind die Abmessungen und Wirkgrößen der Einzelzylinder unabhängig voneinander dimensionierbar, was eine bessere Anpassung an unterschiedliche Anforderungen ermöglicht. Außerdem sind die Einzelzylinder einzeln austauschbar, was Reparaturen günstiger und flexibler macht. Im Vergleich zu einem Teleskopzylinder ergibt sich eine längere, aber auch schlankere Bauform, was insgesamt vorteilhaft ist, da sich der Durchmesser des Zylinders auf die Breite des Hubgerüsts auswirkt. Dadurch können sich Gewichtsvorteile ergeben. In einer Variante kann die Schwenkantriebszylinderanordnung auch einen Mehrfachzylinder aufweisen, der mehr als zwei Einzelzylinder aufweist. Mit unterschiedlichen wirksamen Kolbendurchmessern können mehr als zwei Stufen mit unterschiedlicher Kraft der Schwenkantriebszylinderanordnung bei konstantem Druck und unterschiedlicher Ausfahrgeschwindigkeit der Kolbenstangen bei konstanter Zufuhr von Hydraulikflüssigkeit realisiert werden. In einer Variante des Doppelzylinders sind Zylinderkammern als einzelne Elemente realisiert. In einer alternativen Variante sind die Zylinderkammern einstückig ausgeführt oder miteinander verschweißt.

Bei dem Hubgerät sind Einzelzylinder so miteinander in Reihe gekoppelt, dass die Kolbenstangen in entgegengesetzte Richtungen aus der jeweiligen Zylinderkammer ausfahrbar sind. Inbesondere sind die Enden der Zylinderkammern, aus denen die Kolbenstangen austreten, voneinander weg gerichtet, wobei eine Kolbenlängsachse von einem der Einzelzylinder mit einer Kolbenlängsachse von dem anderen Einzelzylinder fluchtet. Auf diese Weise ergibt sich kein Drehmoment in dem Doppelzylinder, wenn die Kolben der Einzelzylinder mit Last in Richtung der Kolbenlängsachse beaufschlagt sind. Das Verhältnis des wirksamen Kolbendurchmessers des einen Einzelzylinders zu dem wirksamen Kolbendurchmesser des anderen Einzelzylinders liegt zwischen 1:1,1 und 1:1,5, insbesondere etwa 1:1,25. Diese Werte haben sich in der Praxis als geeignet herausgestellt. Das besonders bevorzugte Verhältnis der Kolbendurchmesser von 1:1,25 entspricht einem Kraftverhältnis der Einzelzylinder bei gleichem Hydraulikfluiddruck von etwa 1:1,6.

In einer Ausführungsform des Hubgeräts ist zumindest eine Kolbenstange der Einzelzylinder zumindest zu wesentlichen Teilen aus Vollmaterial. Da in Varianten einer der Einzelzylinder einen großen Arbeitshub aufweist, kann eine entsprechend aus dem Einzelzylinder ausfahrbare Kolbenstange aufgrund ihres Aspektverhältnisses knickgefährdet sein. Durch das Mitschwenken des Zylinders mit der Schwenkbewegung des Schwenkarms ist es außerdem schwierig oder sogar unmöglich, eine Knickstütze für die Kolbenstange vorzusehen. Das Merkmal "zu wesentlichen Teilen aus Vollmaterial" umfasst, dass die Kolbenstange z.B. Augen zur Befestigung an dem Hubgerät und/oder Gewindebohrungen oder dergleichen aufweist; es umfasst jedoch nicht, dass die Kolbenstange innen wenigstens größtenteils hohl ist.

In einer weiteren Ausführungsform des Hubgeräts liegt das Verhältnis der Längen der Einzelzylinder zwischen1:5 und 1:20, und beträgt insbesondere etwa 1:10. Dadurch wird der Doppelzylinder den Hebelverhältnissen in typischen Hubgeräten gerecht, bei denen zu Beginn der Hub- bzw. Schwenkbewegung des Schwenkarms besonders viel Kraft erforderlich ist, während im weiteren Verlauf der Bewegung weniger Kraft, aber viel Arbeitshub erforderlich ist. Dies gilt insbesondere für einen Abladevorgang, jedoch besteht auch zu Beginn eines Aufladevorgangs ein erhöhter Kraftbedarf. Dem zuvor Ausgeführten entspricht, dass der Arbeitshub des Einzelzylinders mit dem größeren Kolbendurchmesser in einer Variante kleiner als der Arbeitshub des Einzelzylinders mit kleinerem Kolbendurchmesser ist.

In einer weiteren Ausführungsform des Hubgeräts sind beide Einzelzylinder des Doppelzylinders über einen gemeinsamen Druckfluidanschluss betätigbar. Dies bedeutet, dass bei Beaufschlagung des Doppelzylinders mit Fluiddruck zunächst der Einzelzylinder mit dem größeren Kolbendurchmesser bis zu seinem Anschlag ausfährt. Da durch den größeren Kolbendurchmesser mit dem gleichen Fluiddruck eine größere Kraft erzeugt wird, kommt es zu diesem Verhalten. Nachdem der Einzelzylinder mit dem größeren Kolbendurchmesser seinen Anschlag erreicht hat, fährt der andere Einzelzylinder mit dem kleineren Kolbendurchmesser aus. Besonders bevorzugt ist ein gemeinsamer Druckfluidanschluss für jede der Bewegungsrichtungen der doppeltwirkenden Einzelzylinder vorgesehen. Dann ergibt sich das oben beschriebene Verhalten, bei dem der Einzelzylinder mit dem größeren Kolbendurchmesser zuerst ausfährt, auch für das Einfahren der Einzelzylinder. Besonders bevorzugt entspricht der Durchmesser der Kolbenstangen der Einzelzylinder dem Verhältnis der Zylinderdurchmesser der Einzelzylinder. Somit ergeben sich für beide Bewegungsrichtungen der Einzelzylinder jeweils dieselben Kraftverhältnisse beim Einfahren bzw. Ausfahren der Kolbenstangen. Mit den unterschiedlichen Kraftverhältnissen der beiden Einzelzylinder bzw. den entsprechenden wirksamen Kolbendurchmessern geht einher, dass die Ausfahrgeschwindigkeit der Einzelzylinder unterschiedlich ist. Bei gleicher Zufuhr von Hydraulikfluid fährt der Einzelzylinder mit dem kleineren Kolbendurchmesser um das quadrierte Verhältnis der wirksamen Kolbendurchmesser schneller aus bzw. ein als die Kolbenstange mit dem größeren wirksamen Kolbendurchmesser. Daraus ergibt sich eine langsame Bewegung des Schwenkarms unter großer Last, während in der Stufe des Doppelzylinders, der die geringere Kraft erzeugt, eine schnellere Bewegung des Schwenkarms erfolgt. Durch die schnellere Bewegung des Schwenkarms kann die Zeit für das Auf- bzw. Abladen erheblich verkürzt werden. Dies gilt insbesondere, wenn der Einzelzylinder mit dem kleineren wirksamen Kolbendurchmesser erheblich länger ist als der Einzelzylinder mit dem größeren wirksamen Kolbendurchmesser. Dabei muss jedoch auch die Geometrie des Hubarms und dessen Anlenkung berücksichtigt werden. Insbesondere, wenn das Hebelverhältnis der Anlenkung zu der Bewegung des Wechselbehälters so ist, dass sich der Wechselbehälter im Vergleich zu anderen Abschnitten des Auf- bzw. Abladevorgangs durch die Kolbenbewegung nur langsam bewegt, ist eine hohe Kolbengeschwindigkeit von besonderer Bedeutung, da sonst ein entsprechender Abschnitt des Auf- bzw. Abladevorgangs lange dauern kann.

In einer weiteren Ausführungsform des Hubgeräts bildet eine Verbindungseinrichtung für die beiden Einzelzylinder zugleich einen gemeinsamen Druckfluidanschluss für beide Einzelzylinder. Bei der Montage der beiden Einzelzylinder zu einem Doppelzylinder wird somit zugleich mit der mechanischen Verbindung der hydraulische Anschluss für die Seite der Zylinder geschaffen, auf der der volle Kolbendurchmesser wirksam ist. Bevorzugt ist die Verbindungseinrichtung als einstückiges Teil ausgeführt. Bevorzugt weist die Verbindungseinrichtung je ein Außengewinde zum Aufschrauben eines Innengewindes von je einem der Einzelzylinder auf. Der gemeinsame Druckfluidanschluss für beide Einzelzylinder kann durch Bohrungen in der Verbindungseinrichtung realisiert sein, wobei eine solche Bohrung je eine Drucckammer der Einzelzylinder miteinander verbindet. Eine weitere Bohrung vom Äußeren der Verbindungseinrichtung entweder zu einer der Druckkammern eines der Einzelzylinder oder zu der Verbindungsbohrung kann den gemeinsamen Druckfluidanschluss bilden. Es sei darauf hingewiesen, dass im Maschinenbau Löcher unabhängig von deren Herstellmechanismus als Bohrung bezeichnet werden. Die vorgeschlagene Verbindungseinrichtung spart Gewicht und ermöglicht zudem einen einzelnen Anschluss für zwei Druckkammern der Einzelzylinder ohne weitere Bauteile. Zusätzlich zu der hydraulischen Verbindung durch die Verbindungseinrichtung kann eine weitere hydraulische Verbindung zwischen den beiden anderen Druckkammern der doppeltwirkenden Einzelzylinder vorgesehen sein, die insbesondere das Einfahren der Kolbenstange bewirken.

Insbesondere bei einem Hubgerät für ein Abrollkipperfahrzeug und bei einem Hubgerät für ein Absetzkipperfahrzeug sollten wenigstens zwei Schwenkantriebszylinder vorgesehen werden, von denen wenigstens einer ein Doppelzylinder der vorstehend angesprochenen Art ist. Vorzugsweise sollten zwei gleichartige Doppelzylinder verwendet werden.

Die Erfindung wird im Folgenden unter Bezugnahme auf die Figuren näher erläutert.
- Fig. 1a: zeigt in stark vereinfachter Darstellung die Seitenansicht eines konventionellen Abrollkipperfahrzeuges mit in der normalen Fahrtstellung aufgenommenem Wechselbehälter.
- Fig. 1b: zeigt eine Skizze zur Erläuterung der Hebelverhältnisse zwischen einem hydraulischen Antriebszylinder und einem Schwenkarm des Hubgerätes auf dem Abrollkipperfahrzeug zu Beginn des Schwenkvorgangs des Schwenkarmes ausgehend von der Stellung gemäß Fig. 1a.
- Fig. 1c: zeigt das Hubgerät des Abrollkippers in der normalen Fahrtstellung gemäß Fig. 1a in einer perspektivischen und im Vergleich mit Fig. 1a detaillierteren Darstellung.
- Fig. 2a: zeigt das Abrollkipperfahrzeug in einer der Fig. 1a ähnlichen Ansicht in einer Momentaufnahme beim Abladen des Wechselbehälters, wobei der Schwenkarm aus seiner normalen Fahrtstellung heraus verschwenkt worden ist.
- Fig. 2b: zeigt eine Skizze zur Erläuterung der Hebelverhältnisse zwischen dem Antriebszylinder und dem Schwenkarm in dem Zustand gemäß Fig. 2a.
- Fig. 3a: zeigt das Abrollkipperfahrzeug mit weit nach hinten verschwenktem Schwenkarm und hinter dem Fahrzeug abgesetztem Wechselbehälter, wobei der Schwenkantriebszylinder an dem Schwenkarm zieht, um den Wechselbehälter wieder aufzuladen.
- Fig. 3b: zeigt eine Skizze zur Erläuterung der Hebelverhältnisse zwischen dem Antriebszylinder und dem Schwenkarm in dem Zustand gemäß Fig. 3a.
- Fig. 3c: zeigt in einer perspektivischen Darstellung das Hubgerät des Abrollkipperfahrzeugs in dem Zustand gemäß Fig. 3a.
- Fig. 4a: zeigt das Abrollkipperfahrzeug in einem Kippbetriebszustand in Seitenansicht.
- Fig. 4b: zeigt das Hubgerät aus Fig. 4a in einer perspektivischen und detaillierten Darstellung.
- Fig. 5: zeigt in einer perspektivischen Darstellung ein Hubgerät nach der Erfindung mit einem verbesserten Schwenkantriebskonzept.
- Fig. 6: zeigt in einer Längsschnittdarstellung einen Doppelzylinder für das Hubgerät gemäß Fig. 5.
- Fig. 7: zeigt eine Ansicht des Doppelzylinders aus Fig. 6.

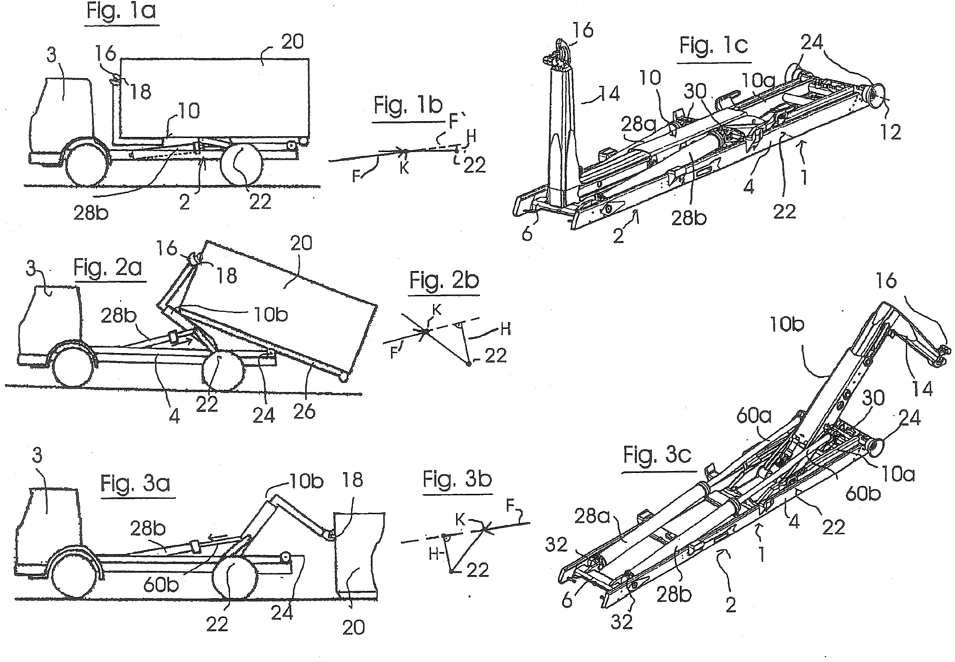

Das in den Figuren 1c, 3c und 4b gezeigte Hubgerät 2 umfasst einen Basisrahmen 1 aus Längsträgern 4 und Querstreben 6. Der zwischen den Längsträgern 4 vorgesehene Schwenkarm 10 erstreckt sich in der in Fig. 1c gezeigten Grundstellung (normale Fahrtstellung) von der quer zur Fahrzeuglängsrichtung liegenden heckseitigen Kippachse 12 nach vorne und weist an seinem von der Kippachse 12 entfernten Ende einen orthogonal nach oben abgewinkelten Hakenarm 14 mit einem Haken 16 zur Ineingriffnahme einer komplementären Öse 18 eines Behälters 20 (vgl. Fig. 1a) auf. Der Schwenkarm 10 weist einen kippachsennahen Schwenkarmabschnitt 10a und einen an dessen von der Kippachse 12 entferntem Ende um eine zur Kippachse 12 parallele Knickachse 22 schwenkbar gelagerten zweiten Schwenkarmabschnitt 10b auf.

Aus den Figuren 1a - 3c ist zu ersehen, dass ein auf dem Basisrahmen 1 des Hubgerätes 2 auf dem Fahrzeug 3 aufgenommener Behälter 20 durch Verschwenken des zweiten Schwenkarmabschnittes 10b um die Knickachse 22 vom Fahrzeug abgesetzt werden kann. Dabei gelangt der zweite Schwenkarmabschnitt 10b von der in Fig. 1a und Fig. 1c gezeigten Grundstellung in die in Fig. 3a und Fig. 3c gezeigte Auslegerstellung. Der Behälter rollt beim Absetzen an den Rollen 24 des Hubgerätes 2 mit seinen Behälterkufen 26 ab.

Zur Aufnahme eines hinter dem Heck eines Fahrzeugs 3 stehenden Behälters 20 können die anhand der Figuren 1a, 2a und 3a gezeigten Bewegungsabläufe umgekehrt werden.

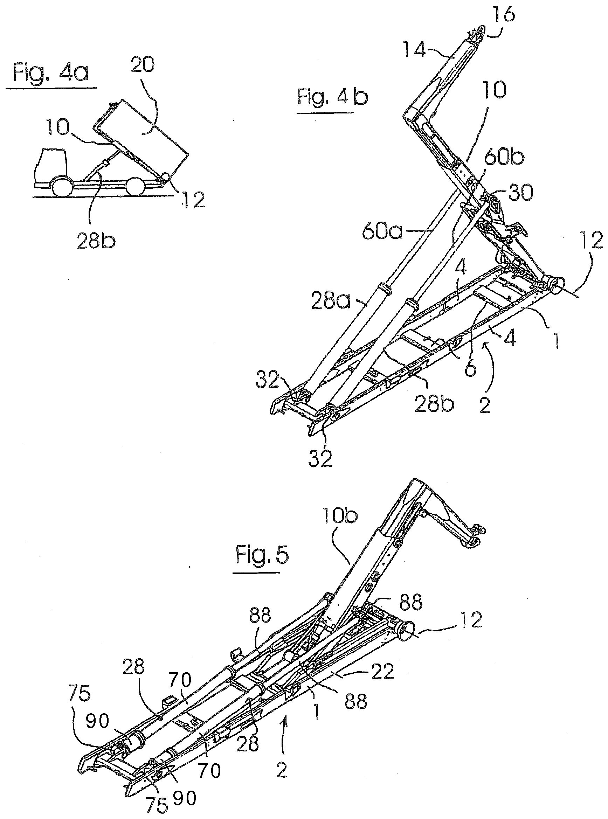

In einer Kippbetriebsart gemäß den Figuren 4a und 4b sind die beiden Schwenkarmabschnitte 10a und 10b starr miteinander verriegelt, so dass die zum Absetzen und Aufnehmen eines Behälters 20 genutzte Knickoption des Schwenkarms 10 unterdrückt ist. Der Behälter 20 kann somit am Fahrzeug 3 in eine Kippstellung gemäß Fig. 4a gebracht werden.

Ungeachtet dessen, ob der Schwenkarm 10 in der in den Figuren 1a, 2a und 3a gezeigten Weise oder in der in Fig. 4a gezeigten Weise bewegt wird, dienen als Antriebsmittel zwei hydraulische Schwenkantriebszylinder 28a, 28b, die mit ihren Kolbenstangenenden 30 an dem zweiten Schwenkarmabschnitt 10b angelenkt sind. Die beiden hydraulischen Schwenkantriebszylinder 28a, 28b erstrecken sich im Beispielsfall parallel zwischen den Längsträgern 4 des Basisrahmens 1 und sind mit ihren Zylindergehäuseenden 32 an dem Basisrahmen 1 angelenkt. Die Schwenkantriebszylinder 28a und 28b in den Figuren 1a - 4b sind gleicher und konventioneller Bauart. Sie sind über den Basisrahmen 1 und den zweiten Schwenkarmabschnitt 10b mechanisch zum Gleichlauf gekoppelt.

In der in den Figuren 1a und 1c gezeigten Grundstellung oder normalen Fahrtstellung liegt der Schwenkarm 10 im Wesentlichen horizontal auf dem Grundrahmen 1, wobei die parallel zueinander liegenden hydraulischen Schwenkantriebszylinder 28a und 28b so ausgerichtet sind, dass ihre Längsachsen unter einem relativ kleinen Anstellwinkel relativ zur Horizontalen verlaufen. Die geometrischen Kraftangriffsverhältnisse zwischen den Schwenkantriebszylindern 28a, 28b und dem Schwenkarm 10 sind in Fig. 1b skizziert. F bezeichnet die Richtung der von den Schwenkantriebszylindern 28a, 28b beim Ausfahren der Kolbenstangen ausgehend von der in den Figuren 1a und 1c gezeigten Ausgangsstellung ausgeübten Kraft. Mit 22 ist in Fig. 1b die Knickachse des Schwenkarms 10 und somit die Drehachse für den zweiten Schwenkarmabschnitt 10b bezeichnet. K bezeichnet den Kraftangriffspunkt der Schwenkantriebszylinder 28a, 28b an dem zweiten Schwenkarmabschnitt 10b. Dieser Kraftangriffspunkt K entspricht der Stelle der Anlenkung der Kolbenstangen 60a, 60b der hydraulischen Schwenkantriebszylinder 28a, 28b am zweiten Schwenkarmabschnitt 10b. Mit H ist der wirksame Hebelarm für die Kraft F beim Verschwenken des Schwenkarmabschnittes 10b aus der Grundstellung gemäß den Figuren 1a und 1c heraus bezeichnet. Es handelt sich bei H um den senkrecht auf der Kraftwirkungslinie F' stehenden Abstand zwischen der Kraftwirkungslinie F' und dem Drehpunkt 22 in Fig. 1b.

Aufgrund des sehr kleinen Hebelarms H liegen zunächst sehr ungünstige Hebelverhältnisse vor, so dass von den Schwenkantriebszylindern 28a und 28b eine relativ große Kraft aufgebracht werden muss, um das zum Verschwenken des zweiten Schwenkarmabschnittes 10b erforderliche Drehmoment aufzubringen. Die Schwenkantriebszylinder 28a und 28b sind dementsprechend so dimensioniert, dass sie unter Berücksichtigung einer spezifizierten Maximallast auf dem Schwenkarm 10 die extrem großen Kräfte bei Einleitung des Schwenkvorganges gemäß Fig. 1a - 1c sicher aufbringen können. Die Figuren 1c und 3c vermitteln einen Eindruck darüber, dass die hydraulischen Schwenkantriebszylinder 28a und 28b der konventionellen Bauart relativ groß ausgebildet sind. Sie nehmen damit auch an einer entsprechend großen Gewichtsbelastung des Fahrzeugs teil und benötigen zu ihrem hydraulischen Betrieb eine relativ große Menge an Druckfluid.

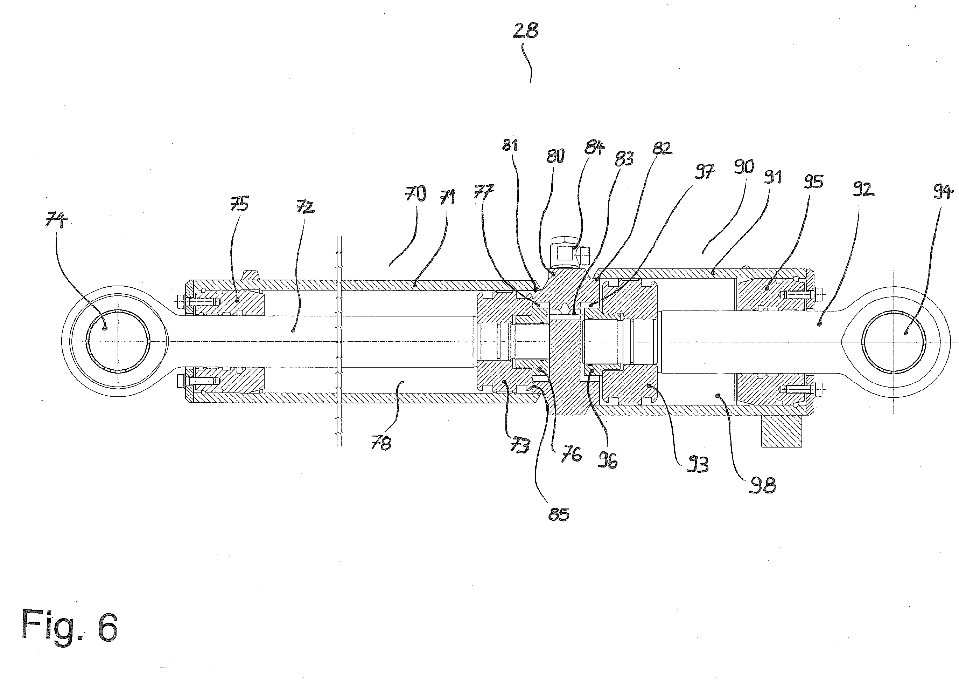

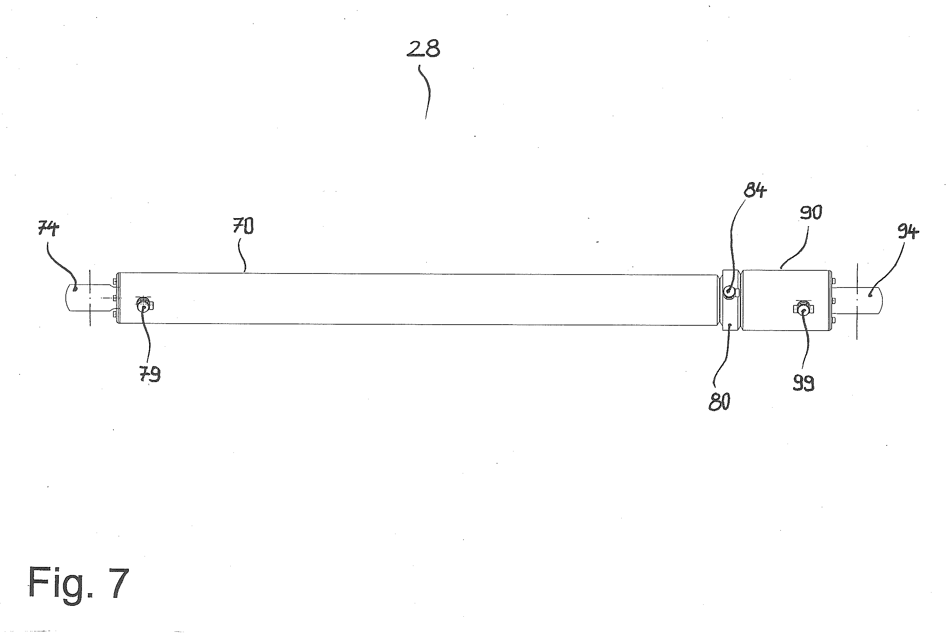

In Fig. 2a ist der Schwenkvorgang bereits so weit fortgeschritten, dass der zweite Schwenkarmabschnitt 10b einen Winkel von fast 45° mit der Horizontalen einschließt. Die Kraftangriffs- und Hebelverhältnisse sind in einer solchen Situation erheblich günstiger als in der Ausgangsstellung gemäß Fig. 1a. Aus der Skizze gemäß Fig. 2b ist zu ersehen, dass der wirksame Hebelarm H für die Kraft F in der Situation gemäß Fig. 2a erheblich größer ist als in der Ausgangssituation gemäß Fig. 1a - Fig. 1c. Zur Bereitstellung eines hinreichenden Drehmomentes (Produkt aus Kraft F und Hebelarm H) müssen die Schwenkantriebszylinder 28a und 28b somit eine erheblich kleinere Kraft aufbringen als in der Situation gemäß Fig. 1a - Fig. 1c. Jedoch ergibt sich aus dem geringeren erforderlichen Drehmoment auch, dass der Hub der Schwenkantriebszylinder 28a und 28b zu weniger Bewegung des Wechselbehälters führt. Es ist daher vorteilhaft, wenn die Schwenkantriebszylinder 28a und 28b in diesem Abschnitt des Abladevorgangs schneller ausfahren. Dagegen ist es bei einem kurzen Hebelarm ausreichend, wenn die Schwenkantriebszylinder 28a und 28b langsamer ausfahren, weil durch die Hebelübersetzung trotzdem eine zügige Bewegung des Wechselbehälters stattfindet. Eine langsame Bewegung der Schwenkantriebszylinder 28a und 28b zu Beginn des Abladevorgangs und eine schnellere Bewegung im weiteren Verlauf des Abladevorgangs wird durch den erfindungsgemäßen Schwenkantriebszylinder geleistet, welcher im Detail mit Bezug auf Fig. 6 und 7 beschrieben ist.

Fig. 3a zeigt das Abrollkipperfahrzeug mit abgeladenem Behälter 20 (letzterer ist in Fig. 3a nur teilweise dargestellt), wobei angenommen werden soll, dass die Schwenkantriebszylinder 28a und 28b nun hydraulisch so angesteuert sind, dass sie ihre Kolbenstangen 60a, 60b einziehen, um den zweiten Schwenkarmabschnitt 10b wieder in die Ausgangslage gemäß Fig. 1a zu verschwenken und dabei den Wechselbehälter 20 wieder auf das Fahrzeug 3 aufzuladen. Aus Fig. 3b ist unmittelbar zu ersehen, dass die Kraftangriffs- und Hebelverhältnisse für diesen Schwenkvorgang ausgehend von der Situation gemäß Fig. 3a nicht sehr ungünstig sind, da der wirksame Hebelarm H für die Kraft F im Vergleich zum Beginn des Abladevorgangs groß ist. Dennoch ist das Aufladen in dieser Position dadurch erschwert, dass der Wechselbehälter an seiner zu dem Lastentransportfahrzeug gewandten Seite ohne weitere Unterstützung angehoben werden muss, wogegen die Kräfte, die im weiteren Verlauf des Aufladevorgangs, in dem der Wechselbehälter auf das Fahrzeug gezogen wird, geringer sind. Außerdem verändert sich das Hebelverhältnis im Verlauf des Aufladevorgangs, wobei, wie in Fig. 2b dargestellt ist, zudem ein vergrößerter Hebelarm für die Schwenkantriebszylinder 28a und 28b erreicht wird. Dieser erfordert jedoch eine schnellere Bewegung der Schwenkantriebszylinder 28a und 28b, um einen zügigen Aufladevorgang zu erreichen. Wie mit Bezug auf die Fig. 6 und 7 noch detaillierter ausgeführt ist, kommt als hydraulischer Schwenkantriebszylinder ein Doppelzylinder mit einem kurzen Einzelzylinder mit größerem wirksamem Kolbenquerschnitt und einem langen Einzelzylinder mit kleinerem wirksamem Kolbendurchmesser zum Einsatz. Die beiden Einzelzylinder sind so miteinander verbunden, dass die Achsen der beiden Kolbenstangen miteinander fluchten und die Kolbenstangen aus entgegengesetzten Enden des Doppelzylinders aus diesem austreten. Dementsprechend ist es auch beim Aufladen des Wechselbehälters von erheblichem Vorteil, dass zunächst der Einzelzylinder mit dem größeren wirksamen Kolbendurchmesser in Aktion tritt, um die größeren Anfangskräfte und das etwas schlechtere Hebelverhältnis zu kompensieren. Der weitere Aufladevorgang, in dem der zweite Einzelzylinder mit dem kleineren wirksamen Kolbendurchmesser in Aktion tritt, entwickelt bei gleicher Zuführung von Hydraulikfluid eine erheblich höhere Geschwindigkeit beim Einziehen, so dass der Aufladevorgang verkürzt wird, insbesondere, wenn der Einzelzylinder mit dem kleineren wirksamen Kolbendurchmesser einen erheblich längeren Hub als der Einzelzylinder mit dem größeren wirksamen Kolbendurchmesser hat.

Auch bei Einleitung eines Kippvorgangs zum Kippen eines Wechselbehälters 20 gemäß den Figuren 4a und 4b aus einer Grundstellung entsprechend den Figuren 1a - 1c heraus sind die Kraftangriffs- und Hebelverhältnisse zunächst sehr ungünstig, da der in Bezug auf die Kippachse 12 wirksame Hebelarm zunächst ebenfalls sehr klein ist und die Erzeugung eines hinreichend großen Drehmomentes für den Kippvorgang eine sehr große von den hydraulischen Schwenkantriebszylindern 28a, 28b aufzubringende Kraft erfordert.

In den Figuren 1c, 3c und 4b ist das Hubgerät 2 mit konventionellen Schwenkantriebszylindern 28a und 28b gezeigt. In Fig. 5 ist ein Hubgerät mit verbessertem Antriebskonzept nach der Erfindung dargestellt. Im Beispielsfall hat das erfindungsgemäße Hubgerät gemäß Fig. 5 einen ähnlichen Aufbau wie das vorstehend unter Bezugnahme auf die Figuren 1a bis 4b erläuterte Hubgerät. Strukturell gleiche Elemente des konventionellen Hubgeräts und des erfindungsgemäßen Hubgerätes sind mit gleichen Bezugszeichen gekennzeichnet, so dass zur Erläuterung des erfindungsgemäßen Hubgerätes in Fig. 5 insoweit auf die obige Beschreibung verwiesen werden kann. Die schematisch dargestellten Schwenkantriebszylinder 28 in Fig. 5 sind Doppelzylinder, deren Aufbau im Folgenden unter Bezugnahme auf Fig. 6 näher erläutert wird.

Fig. 6 zeigt einen der erfindungsgemäß ausgestalteten Doppelzylinder 28 in einer Längsschnittdarstellung. Er weist zwei Einzelzylinder 70 und 90 sowie ein Verbindungselement 80 auf, mit dem die Einzelzylinder 70 und 90 miteinander verbunden sind. Jeder der Einzelzylinder 70 und 90 weist eine Kolbenstange 72 bzw. 92 auf, die an ihrem von dem Einzelzylinder jeweils weg gerichteten Ende jeweils ein Auge 74 bzw. 94 zur gelenkigen Lagerung an dem Basisrahmen 1 (vgl. Fig. 5) hat. Das Zylinderelement 71 und die Kolbenstange 72 sind, wie durch eine Unterbrechung angedeutet, in der Fig. 6 verkürzt dargestellt. Die Längsachsen der Kolbenstangen 72 bzw. 92 fluchten zueinander. Dementsprechend fluchten auch die Zylinderelemente 71 und 91 in Bezug auf deren Mittelachse zueinander. Jede der beiden Kolbenstangen 72 bzw. 92 ist durch einen Kolbenkörper 73 bzw. 93 gesteckt. Die Kolbenkörper 73 bzw. 93 sind mit Befestigungsstücken 76 bzw. 96 jeweils an den Kolbenstangen 72 bzw. 92 befestigt. Die Kolbenkörper 73 bzw. 93 weisen einen größeren Außendurchmesser als die Kolbenstangen 72 bzw. 92 auf. Der Außendurchmesser der Kolbenkörper 73 bzw. 93 passt zu dem Innendurchmesser von den Zylinderkörpern 71 bzw. 91, wobei die Kolbenkörper 73 bzw. 93 verschieblich in den Zylinderkörpern 71 bzw. 91 angeordnet sind. Die Innendurchmesser der Zylinderkörper 71 bzw. 91 legen jeweils den wirksamen Kolbendurchmesser der Einzelzylinder 70 bzw. 90 fest.

Das Befestigungsauge 94 dient der Anlenkung des Zylinders 28 an dem Schwenkarmabschnitt 10b (vgl. Fig. 5). Alternativ kann der Zylinder 28 auch in umgekehrter Lage zwischen dem Rahmen 1 und dem Schwenkarmabschnitt 10b eingebaut sein.

Die Kolbenstangen 72 bzw. 92 treten aus den Einzelzylindern 70 bzw. 90 jeweils durch ein Abschlussstück 75 bzw. 95 hindurch aus. Die Abschlussstücke 75 bzw. 95 sind an den Zylinderelementen 71 bzw. 91 befestigt und weisen sowohl gegenüber den Zylinderelementen 71 bzw. 91 als auch gegenüber den Kolbenstangen 72 bzw. 92 jeweils Dichtungselemente auf.

Das Verbindungselement 80 zwischen den Einzelzylindern 70 und 90 ist mit diesen jeweils an einer Verbindungsstelle 81 bzw. 82 verschweißt. Alternativ können die Einzelzylinder 70 und 90 auch mit einem Gewinde an dem Verbindungselement 80 befestigt sein. Die Zylinderelemente 71 bzw. 91 weisen an ihrem zu dem Verbindungselement 80 gerichteten Ende jeweils ein passendes Innengewinde auf. Diese Schraubverbindungen an den Verbindungsstellen 81 und 82 sind druckdicht ausgeführt. Die Verbindungsstellen 81 und 82 sind so dimensioniert, dass sie die Zug- bzw. Druckkräfte der Einzelzylinder 70 und 90 sicher übertragen können. Im Inneren des Verbindungselements 80 befindet sich eine Verbindungsbohrung 83, mittels der je eine Druckkammer 77 bzw. 97 der Einzelzylinder 70 bzw. 90 hydraulisch miteinander verbunden sind. Bei Beaufschlagung der Druckkammern 77 bzw. 97 mit Hydraulikdruck fahren die jeweiligen Kolbenstangen 72 bzw. 92 der Einzelzylinder 70 bzw. 90 aus. Die Druckkammern 77 befinden sich zwischen dem Verbindungselement 80 und dem jeweiligen Kolbenkörper 73 bzw. 93 der beiden Einzelzylinder 70 bzw. 90. Der Verbindungskanal 83 ist über eine weitere Bohrung zum Außenumfang des Verbindungselements 80 an eine Anschlusseinrichtung 84 zur Zuführung von Hydraulikdruck zu den Einzelzylindern 70 und 90 angeschlossen. Die Zuführung von druckbeaufschlagtem Hydraulikmedium zu der Anschlusseinrichtung 84 bewirkt eine Weiterleitung des Drucks in die Druckkammern 77 bzw. 97.

Der Innendurchmesser des Zylinderelements 91 ist größer als der Innendurchmesser des Zylinderelements 71. Entsprechend hat der Kolbenkörper 93 eine größere wirksame Querschnittsfläche als der Kolbenkörper 73. Werden die Druckkammern 77 bzw. 97 mit demselben Druck beaufschlagt, so entwickelt der Einzelzylinder 90 eine größere Kraft als der Einzelzylinder 70. Da von außen auf den Doppelzylinder 28 wirkende Kräfte von dem Auge 74 zu dem Auge 94 geleitet werden, liegt an beiden Einzelzylindern 70 bzw. 90 jeweils die gleiche Kraft in Richtung der Kolbenstange 72 bzw. 92 an. Somit fährt der die größere Kraft entwickelnde Einzelzylinder 90 seine Kolbenstange 92 aus, während der Kolbenkörper 73 des Einzelzylinders 70 nicht ausfährt, sondern an einer Anschlagfläche 85 des Verbindungselements 80 anliegt. Bei fortwährender Zuführung von druckbeaufschlagtem Hydraulikfluid zu der Druckkammer 97 fährt die Kolbenstange 92 aus, bis der Kolbenkörper 93 an dem Abschlussstück 95 des Einzelzylinders 90 anschlägt. Dabei wird Hydraulikfluid aus einer Druckkammer 98 für die Gegenbewegung verdrängt. Wenn der Kolbenkörper 93 an dem Abschlussstück 95 anliegt, beginnt bei weiterer Zuführung von Hydraulikfluid die Kolbenstange 72 aus dem Einzelzylinder 70 auszufahren. Unter Umständen ist dazu im Vergleich zum Ausfahren der Kolbenstange 92 ein erhöhter Druck der zugeführten Hydraulikflüssigkeit erforderlich. Dabei wird Hydraulikfluid aus einer für die Gegenbewegung vorgesehenen Druckkammer 78 verdrängt. Wenn der Kolbenkörper 73 das Abschlussstück 75 erreicht, ist der maximale Arbeitshub des Doppelzylinders 28 erreicht. Im Vergleich zu der Ausfahrgeschwindigkeit der Kolbenstange 92 aus dem Einzelzylinder 90 ist die Ausfahrgeschwindigkeit der Kolbenstange 72 aus dem Einzelzylinder 70 bei gleichbleibender Zufuhr von Hydraulikfluid größer.

Ein Einfahrvorgang, bei dem die Druckkammern 78 und 98 gefüllt werden und wobei Hydraulikflüssigkeit aus den Druckkammern 77 bzw. 97 verdrängt wird, findet analog zu dem oben beschriebenen Ausfahrvorgang statt. Dies bedeutet, dass zuerst die Kolbenstange 92 des Einzelzylinders 90 eingefahren wird, da dieser einen größeren wirksamen Kolbendurchmesser aufweist. Besonders bevorzugt werden dazu die Druckkammern 78 und 98 hydraulisch miteinander verbunden und an einer Verbindungsstelle druckbeaufschlagtes Hydraulikfluid zugeführt. Nachdem die Kolbenstange 92 ganz eingefahren ist und dabei der Kolbenkörper 93 das Verbindungselement 80 oder die Kolbenstange 92 das Verbindungselement 80 erreicht hat und dort anliegt, beginnt das Einfahren der Kolbenstange 72 des Einzelzylinders 70. Dieses läuft analog zum Einfahren der Kolbenstange 92 in den Einzelzylinder 90 ab. Wenn der Kolbenkörper 73 die Anschlagstelle 85 an dem Verbindungselement 80 erreicht hat, ist der Einfahrvorgang abgeschlossen und der Doppelzylinder 28 befindet sich in maximal verkürzter Stellung. Aufgrund der beschriebenen Vorgänge beim Einfahren der Kolbenstangen 72 bzw. 92 ergibt sich zu Beginn der Einfahrbewegung durch die Aktivität des Einzelzylinders 90 eine größere, von dem Doppelzylinder 28 erzeugte Kraft als während der Aktivität des Einzelzylinders 70. Dies korrespondiert mit dem höheren Kraftbedarf zu Beginn eines Aufladevorgangs eines Wechselbehälters 20 auf ein Lastentransportfahrzeug 3 mit dem Hubgerät 2.

In Fig. 6 ist der Zylinder 28 in dem Zustand nahezu vollständig eingezogener Kolbenstangen gezeigt, was in etwa mit einer Schwenkstellung des Schwenkarmabschnitts 10b korrespondiert, wie sie in Fig. 1a - 1c dargestellt ist.

Fig. 7 zeigt eine Ansicht des Doppelzylinders 28. Die als Augen 74 bzw. 94 ausgebildeten Enden der Kolbenstangen 72 bzw. 92 der Einzelzylinder 70 bzw. 90 sind in einer Perspektive dargestellt, in der sie im Wesentlichen als rechteckiger Block erscheinen. Der Doppelzylinder 28 ist in einem Zustand gezeigt, in dem die Kolbenstangen maximal eingefahren sind. Zwischen den Einzelzylindern 70 und 90 ist das Verbindungselement 80 angeordnet. Dieses trägt auf seinem Außenumfang die Anschlusseinrichtung 84. Durch Zuführung von druckbeaufschlagtem Hydraulikfluid zu der Anschlusseinrichtung 84 können die Kolbenstangen 72 bzw. 92 mit den Augen 74 bzw. 94 aus den Einzelzylindern 70 bzw. 90 ausgefahren werden. Die Einzelzylinder 70 bzw. 90 weisen jeweils eine Anschlusseinrichtung 79 bzw. 99 auf, mit der in den Druckkammern 78 bzw. 98 verdrängte Hydraulikflüssigkeit aus den Einzelzylindern 70 bzw. 90 austreten kann. Vorzugsweise sind die Anschlusseinrichtungen 79 bzw. 99 hydraulisch miteinander verbunden. Bei Beaufschlagung der Anschlusseinrichtungen 79 bzw. 99 mit druckbeaufschlagter Hydraulikflüssigkeit fahren die Kolbenstangen 72 bzw. 92 mit den Augen 74 bzw. 94 in die Einzelzylinder 70 bzw. 90 ein. Die Anschlusseinrichtungen 79 bzw. 99 liegen vorzugsweise auf demselben Winkel in Umfangsrichtung der Einzelzylinder 70 bzw. 90, so dass sie beispielsweise durch eine gerade Leitung miteinander verbunden werden können. Die Anschlusseinrichtung 84 an dem Verbindungselement 80 ist vorzugsweise auf einem anderen Umfangswinkel als die Anschlusseinrichtungen 79 und 99 angeordnet, so dass eine Verbindung zwischen den Anschlusseinrichtungen 79 und 99 nicht die Anschlusseinrichtung 84 umgehen muss.

## Patentansprüche

1. Hubgerät (2) für Wechselbehälter (20) für ein Lastentransportfahrzeug (3), insbesondere auf einem Abrollkipperfahrzeug (3) oder einem Absetzkipperfahrzeug, umfassend wenigstens einen Schwenkarm (10) zum Abladen eines Wechselbehälters (20) von dem Lastentransportfahrzeug (3) bzw. zum Aufladen eines Wechselbehälters (20) auf das Lastentransportfahrzeug (3) und eine hydraulische Schwenkantriebszylinderanordnung (28) als Schwenkantriebsmittel für den Schwenkarm (10),
**dadurch gekennzeichnet,**
**dass** die Schwenkantriebszylinderanordnung (28) wenigstens einen Doppelzylinder (28) umfasst, der zwei in Reihe miteinander gekoppelte doppeltwirkende Einzelzylinder (70, 90) aufweist, die jeweils eine Zylinderkammer (71, 91) und einen darin verschiebbaren eigenen Kolben (73, 93) mit aus der jeweiligen Zylinderkammer ausfahrbarer Kolbenstange (72, 92) aufweisen, wobei einer der Einzelzylinder (70) einen kleineren wirksamen Kolbendurchmesser als der andere Einzelzylinder (90) aufweist und das Verhältnis des wirksamen Kolbendurchmessers des einen Einzelzylinders (70) zu dem wirksamen Kolbendurchmesser des anderen Einzelzylinders (90) zwischen 1:1,1 und 1:1,5, insbesondere etwa 1:1,25 beträgt, wobei ferner eine Kolbenlängsachse von einem der Einzelzylinder (70, 90) mit einer Kolbenlängsachse von dem anderen Einzelzylinder (70, 90) fluchtet und die Einzelzylinder (70, 90) so miteinander in Reihe gekoppelt sind, dass die Kolbenstangen (72, 92) in entgegengesetzte Richtungen aus der jeweiligen Zylinderkammer (71, 91) ausfahrbar sind.

2. Hubgerät (2) nach Anspruch 1, **dadurch gekennzeichnet, dass** zumindest eine Kolbenstange (72, 92) zumindest zu wesentlichen Teilen aus Vollmaterial ist.

3. Hubgerät (2) nach einem der vorangehenden Ansprüche, **dadurch gekennzeichnet, dass** das Verhältnis der Längen der Einzelzylinder (70, 90) zwischen1:5 und 1:20, insbesondere etwa 1:10 beträgt.

4. Hubgerät (2) nach einem der vorangehenden Ansprüche, **dadurch gekennzeichnet, dass** beide Einzelzylinder (70, 90) des Doppelzylinders (28) über einen gemeinsamen Druckfluidanschluss (84) betätigbar sind.

5. Hubgerät (2) nach einem der vorangehenden Ansprüche, **dadurch gekennzeichnet, dass** eine Verbindungseinrichtung (80) für die beiden Einzelzylinder (70, 90) zugleich einen gemeinsamen Druckfluidanschluss (83, 84) für beide Einzelzylinder (70, 90) bildet.

## Claims

1. A lifting device (2) for interchangeable containers (20) for a load transport vehicle (3), in particular on a roll-off tipper vehicle (3) or a skip loader vehicle, comprising at least one pivoting arm (10) for unloading an interchangeable container (20) from the load transport vehicle (3) or for loading an interchangeable container (20) onto the load transport vehicle (3) and a hydraulic pivot drive cylinder arrangement (28) as pivot drive means for the pivoting arm (10),
**characterised in that**
the pivot drive cylinder arrangement (28) comprises at least one double cylinder (28) having two double-acting single cylinders (70, 90) coupled to one another in series, each having a cylinder chamber (71, 91) and a respective piston (73, 93) which is movable therein and is provided with a piston rod (72, 92) which can be extended out of the respective cylinder chamber, wherein one of the single cylinders (90) has a larger effective piston diameter than the other single cylinder (70) and the ratio of the effective piston diameter of the one single cylinder (70) to the effective piston diameter of the other single cylinder (90) is between 1:1.1 and 1:1.5, in particular approximately 1:1.25, wherein furthermore a piston longitudinal axis of one of the single cylinders (70, 90) is aligned with a piston longitudinal axis of the other single cylinder (70, 90) and the single cylinders (70, 90) are coupled to one another in series so that the piston rods (72, 92) can be extended in opposite directions from the respective cylinder chamber (71, 91).

2. The lifting device (2) according to claim 1, **characterised in that** at least one piston rod (72, 92) is made at least to a significant extent from solid material.

3. The lifting device (2) according to any one of the preceding claims, **characterised in that** the ratio of the lengths of the single cylinders (70, 90) is between 1:5 and 1:20, in particular approximately 1:10.

4. The lifting device (2) according to any one of the preceding claims, **characterised in that** both single cylinders (70, 90) of the double cylinder (28) can be actuated by means of a common pressure fluid connection (84).

5. The lifting device (2) according to any one of the preceding claims, **characterised in that** a connection device (80) for the two single cylinders (70, 90) simultaneously forms a common pressure fluid connection (83, 84) for both single cylinders (70, 90).

## Revendications

1. Appareil de levage (2) pour un conteneur interchangeable (20) pour un véhicule (3) de transport de charge, en particulier sur un véhicule (3) à benne basculante et roulante ou un véhicule à benne amovible, comprenant au moins un bras de pivotement (10) pour le déchargement d'un conteneur interchangeable (20) du véhicule (3) de transport de charge ou pour le chargement d'un conteneur interchangeable (20) sur le véhicule (3) de transport de charge et un agencement de cylindre (28) d'entraînement pivotant hydraulique en tant que moyen d'entraînement pivotant pour le bras de pivotement (10),
**caractérisé en ce**
**que** l'agencement de cylindre (28) d'entraînement pivotant comporte au moins un double cylindre (28) qui présente deux cylindres individuels (70, 90) à double effet accouplés en série l'un à l'autre qui présentent respectivement une chambre de cylindre (71, 91) et un propre piston (73, 93) mobile dans celle-ci avec une tige de piston (72, 92) pouvant sortir de la chambre de cylindre respective, dans lequel un des cylindres individuels (70) présente un plus petit diamètre de piston actif que l'autre cylindre individuel (90) et le rapport entre le diamètre de piston actif de l'un cylindre individuel (70) et le diamètre de piston actif de l'autre cylindre individuel (90) s'élève entre 1:1,1 et 1:1,5, en particulier à environ 1:1,25, et dans lequel en outre un axe longitudinal de piston d'un des cylindres individuels (70, 90) s'aligne sur un axe longitudinal de piston de l'autre cylindre individuel (70, 90) et les cylindres individuels (70, 90) sont accouplés en série l'un à l'autre de sorte que les tiges de piston (72, 92) puissent sortir dans des directions opposées de la chambre de cylindre (71, 91) respective.

2. Appareil de levage (2) selon la revendication 1, **caractérisé en ce qu'**au moins une tige de piston (72, 92) est au moins sensiblement en matériau plein.

3. Appareil de levage (2) selon l'une quelconque des revendications précédentes, **caractérisé en ce que** le rapport entre les longueurs des cylindres individuels (70, 90) s'élève entre 1:5 et 1:20, en particulier à environ à 1:10.

4. Appareil de levage (2) selon l'une quelconque des revendications précédentes, **caractérisé en ce que** les deux cylindres individuels (70, 90) du double cylindre (28) sont actionnables par le biais d'un raccord de fluide sous pression (84) commun.

5. Appareil de levage (2) selon l'une quelconque des revendications précédentes, **caractérisé en ce qu'**un dispositif de raccordement (80) pour les deux cylindres individuels (70, 90) forme à la fois un raccord de fluide sous pression (83, 84) commun pour les deux cylindres individuels (70, 90).
